# EUROPEAN PATENT SPECIFICATION

(11) **EP 2 661 573 B1**
(45) Date of publication and mention of the grant of the patent: **22.10.2014**
(21) Application number: 11794165.8
(22) Date of filing: 09.12.2011
(51) Int. Cl.: F16K 31/524, B01F 13/10

(54) **VALVE ASSEMBLY FOR A DISPENSER FOR FLUIDS**
VENTILANORDNUNG FÜR EINEN FLUIDSPENDER
ENSEMBLE SOUPAPE POUR UN DISTRIBUTEUR DE FLUIDES

(30) Priority: 07.01.2011 US 986273
(43) Date of publication of application: 13.11.2013
(73) Proprietor: Fast & Fluid Management B.V., 2171 KZ Sassenheim (NL)
(72) Inventor: VOSKUIL, Marcus Johannes, NL-2343 GT Oegstgeest (NL)
(74) Representative: De Vries & Metman
(86) International application number: PCT/EP2011/072376
(87) International publication number: WO 2012/093021

(56) References cited:
- EP-A1- 1 688 652
- DE-C- 716 469
- FR-A3- 2 933 761
- US-A- 3 369 564

## Description

### BACKGROUND

### Technical Field

The invention relates to a valve assembly for a dispenser for fluids comprising a housing having at least an inlet opening and an outlet opening and a further opening connected or connectable to a fluid displacement mechanism, e.g. a piston pump, and a valve member disposed within the housing. The invention also relates to an apparatus for dispensing fluids comprising a plurality of such valve assemblies.

### Background of the Related Art

EP 1 688 652 relates to a valve assembly comprising a housing and a valve member mounted within the housing rotatable about an axis and between at least a dispensing position and a further position, for instance a volume selection position during which a material can be withdrawn from a container, and, preferably, a seat for mounting and guiding the valve member within the housing, wherein at least one of said housing, valve member, and seat is made of a synthetic material and the assembly further comprises a spring, which urges at least two of said housing, valve member, and seat together.

WO 02/14726 discloses a valve assembly comprising a "valve enclosure body 10 having at least a first and a second outlet 11, 12 for liquid flowing through the valve. The valve construction ... is intended especially for use in liquid dispensing devices, in which case the first outlet 11 ... leads to a liquid container through a suction pipe, for instance, and the second outlet 12 is connected to liquid dispensing through a nozzle pipe, for instance. The vertical outlet in the figure connects to a plunger pump in the dispensing device.... A valve element 13 is located in the valve enclosure 10 and moves between two extreme positions. In one extreme position, the valve element 13 closes the first outlet 11 and in the second extreme position, it closes the second outlet 12."

US 3,369,564 relates to a three-port valve having a valve member for controlling two of the ports so that when one of the two ports is closed the other is open.

FR 2 933 761 relates to a change valve comprising a "valve base (3)" similar to the valve member in US 3,369,564.

It is an object of the present invention to provide valve assembly for dispensing fluids that allows more cost effective manufacture, in particular by inherently allowing wider tolerances.

### SUMMARY OF THE DISCLOSURE

To this end, the valve member comprises two parts translatably disposed within the housing, a first part for closing and opening the inlet and a second part for opening and closing the outlet.The parts are resiliently biased apart and into closing abutment with the inlet and outlet openings, e.g. by means of an elastic element, such as a spring, positioned between the first and second parts of the valve member. In an aspect, a resilient seat is provided at the interface between at least one of the parts and the opening it closes.

Using two translating parts enables a relatively straightforward design and avoidance of a so called tolerance stack, e.g. by including one or more resilient elements between the parts and/or between one or both of the parts and the inlet and outlet openings. Also, if the valve parts and housing are made of a polymer, the resilient elements, in particular the spring between the valve parts, will compensate for creep.

In an aspect, the valve assembly comprises an operating element extending through the wall of the housing and coupled to the first and second parts of the valve member. In a further aspect, the operating element provides aL least three positions, a first position wherein both parts are in closing abutment with respective openings, a second position wherein the first part of the valve member is withdrawn from the inlet and the second parts closes the outlet, and a third position wherein the second part of the valve member is withdrawn from the outlet and the first part closes the inlet.

In a further aspect, the parts and/or the inner wall of the housing are provided with guides, such as fins or ribs extending in axial direction, supporting translating motion of the parts and defining openings or channels that allow the fluid to flow from the inlet to the displacement mechanism and from the displacement mechanism to the outlet.

In a further aspect, at least one of the parts comprises a portion that, during intake of fluid, substantially closes off or at least obstructs fluid flow directly from the inlet opening to the fluid displacement mechanism and guides fluid flow towards and preferably beyond its end remote from the inlet opening.

The invention further relates to an apparatus for dispensing a plurality of fluids, comprising a support, such as a turntable or a linear table, a plurality of containers for holding a fluid and mounted on the support, and pumps and valve assemblies as described above connected to respective containers.

In an aspect, at least some, preferably all, of the pumps are located below the container and/or extend at least substantially horizontally. The valve assemblies provide a reliable seal between the container and the pump and a reduced risk of leaking due to hydrostatic pressure in the container, thus allowing the specified location which in turn facilitates operating the valves and pumps by means of an internal central actuator.

Within the framework of the invention, the term "fluid" is defined as any material that can flow and that can be dispensed by the apparatus according to the present invention. Examples of fluids include liquids, pastes, granulates, and powders.

### BRIEF DESCRIPTION OF THE DRAWINGS

Figure 1 is a perspective view of an apparatus for dispensing fluids according to the present invention in conjunction with an external computer system.
Figures 2A and 2B are perspective views of sub-assemblies of a container, a valve, and a pump as used in the apparatus shown in Figure 1.
Figures 3A to 3C are cross-sections and a side view of a valve and pump according to the present invention, with the valve closed.
Figures 4A and 4B are cross-sections of the valve in its intake position.
Figures 5A and 5B are cross-sections of the valve in its dispense position.
Figure 6 is a perspective view of a further apparatus for dispensing fluids according to the present invention.
Figure 7 is a perspective view of the valve and pump in the sub-assemblies as used in the apparatus shown in Figure 6.
Figure 8 is an exploded view of the valve and pump shown in Figure 7.
Figures 9A to 9C are cross-sections of a further example of a valve and pump according to the present invention.

The drawings are not necessarily to scale and details, which are not necessary for understanding the present invention, may have been omitted. Terms such as "upward", "downward", "upper" and "lower" merely refer to the orientations shown in the drawings.

### DETAILED DESCRIPTION OF THE PRESENTLY PREFERRED EMBODIMENTS

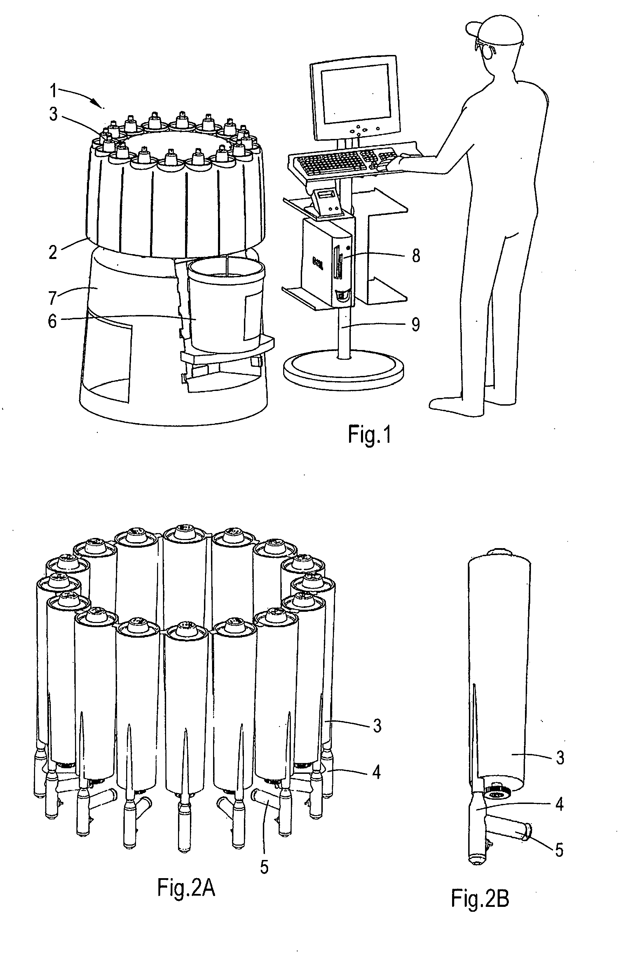

Figures 1, 2A, and 2B show an example of an apparatus 1 for dispensing a plurality of fluids, such as (components of) paints, paint colorants, hair dyes, shampoos, foundations, and the like. It can be used for dispensing numerous recipes and formulas of the said products and can be located e.g. at a retailer of decorative paints, a hairdresser, or a spa, respectively.

This particular dispensing apparatus 1 is an automated version and includes a horizontal turntable 2, with a plurality of containers 3 mounted along its circumference (Figure 2A). Each container 3 is provided with a dispense valve assembly 4 and pump 5 (Figures 2A and 2B). The turntable 2 can be rotated between discrete positions, e.g. twelve or sixteen positions including a dispensing position, i.e. the position where the valves 4 and pumps 5 are operated by means of a central actuator and fluids are dispensed in a receptacle, in this example a bucket 6.

The apparatus 1 includes a base 7 made of e.g. a polymer and by injection moulding. A computer 8 for entering and storing information, such as customer data and recipes, and generating instructions for driving the turntable 2, valves 4 and pumps 5 is positioned on a separate stand 9.

Further details regarding suitable turntables and procedures for driving the various components, are disclosed in, for instance, international application WO 03/083334, European patent application 0 992 450, and European patent application 0 800 858.

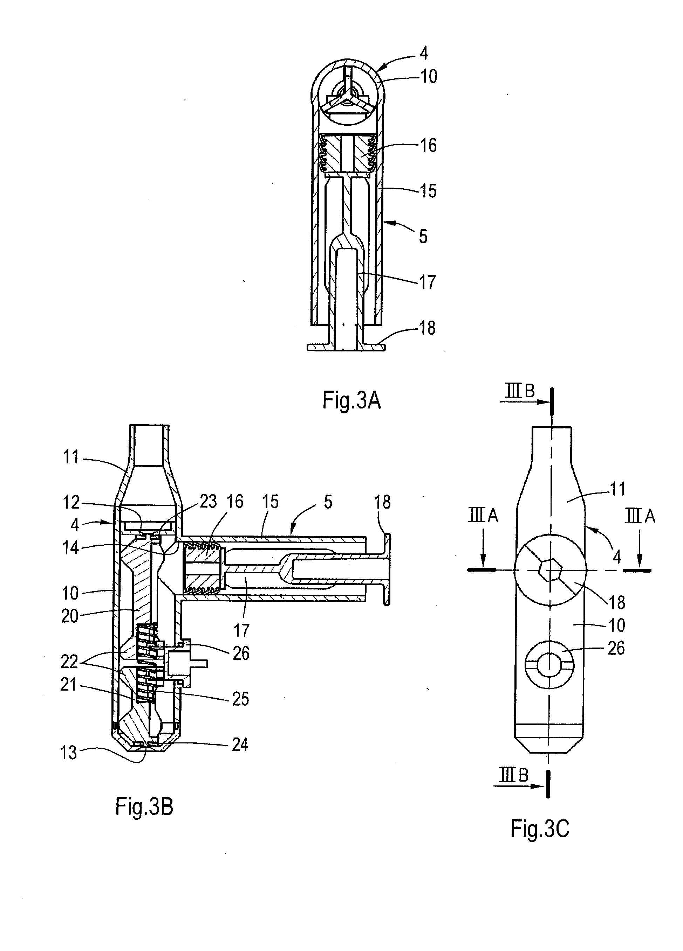

As shown in Figures 3A to 3C, each valve assembly 4 comprises a housing 10 having a cylindrical or conical top section 11 with which the valve assembly 4 can be fitted in an outlet opening in or near the bottom of a container 3. The housing 10 further has an inlet opening 12 in or near its top section 11, an outlet opening 13 in or near its bottom, and a further opening 14 in is side wall, which opening 14 communicates with a pump 5. In this example, the pump 5 comprises a cylinder 15 forming an integral part of the housing 10 and a piston 16 and piston rod 17 mounted inside the cylinder 15. The piston rod 17 is provided, on its end remote from the piston 16, with a washer or flange 18.

A valve member is translatably disposed within the housing 10. The valve member comprises two parts, a first part 20 for closing and opening the inlet 12 and a second part 21 for opening and closing the outlet 13. The housing 10 is cylindrical and the valve parts 12, 13 have a star-shaped cross-section (figure 3A) that, on the one hand, provides guides 22 that support translating motion of the valve parts 20, 21 within the housing 10 and prevent the valve parts 20, 21 from tilting and that, on the other hand, define channels to allow the fluid to flow from the inlet 12 to the pump 5 (along the upper valve part) and from the pump 5 to the outlet 13 (along the lower valve part). To reduce friction of the valve parts 20, 21 within the housing 10, each part abuts the inner wall of the housing on just two axial levels.

Each of the parts 20, 21 is provided, at its end facing the respective opening 12, 13, with a resilient seat 23, 24, made of e.g. silicone or a (fluoro)elastomer such as Viton™. Further, the valve parts 20, 21 are resiliently biased apart and into closing abutment with the inlet and outlet openings 12, 13 by means of a helical spring 25 positioned between the first and second parts 20, 21 of the valve member. A helical spring provides suitable stiffness and stroke as well as an open structure that adds little of no resistance to the flow of fluid within the housing.

Finally, the valve assembly comprises an operating element, e.g. a handle, lever, or, in this example, a rotary knob 26 extending through the wall of the housing 10 and coupled to the first and second parts 20, 21 of the valve member.

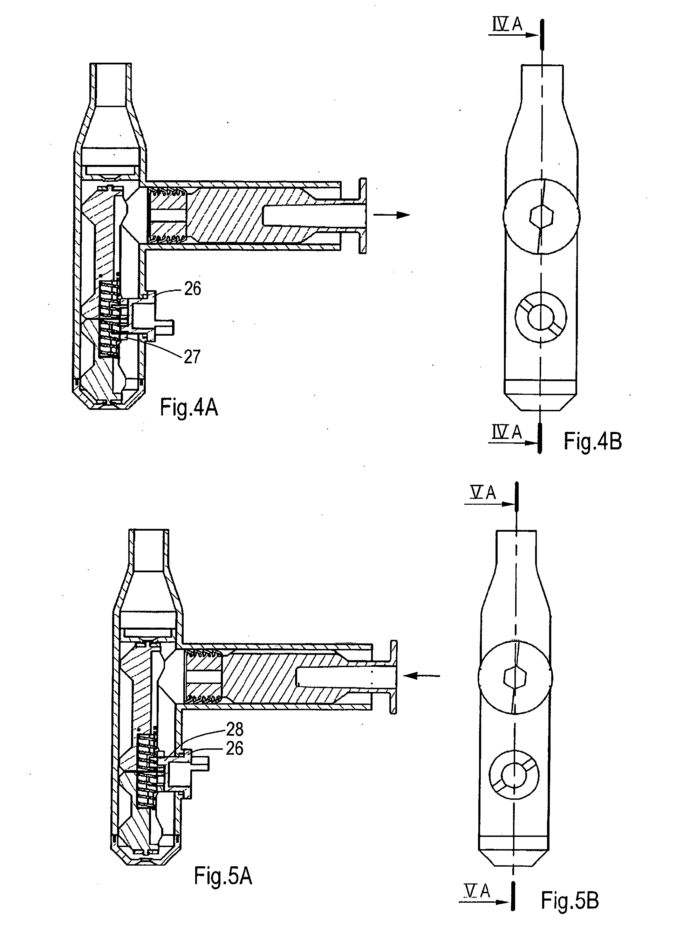

The rotary knob 26 provides three positions, a first or closed position wherein both the inlet opening and the outlet opening are closed by the valve parts (Figures 3A to 3C), a second or intake position wherein the first part of the valve member is withdrawn from the inlet and the second part closes the outlet (Figures 4A and 4B) and a third or dispense position wherein the second part of the valve member is withdrawn from the outlet and the first part closes the inlet (Figures 5A and 5B).

Further, in this example, the rotary knob 26 comprises, on its distal face two eccentric protrusions 27, 28 that cooperate with straight slots on the valve parts 20, 21. The slots extend in a direction perpendicular to the direction of translation of the valve parts and have a width that exceeds the diameter of the eccentric protrusions. If the rotary knob 26 is rotated clockwise the upper protrusion 28 pulls the upper valve part downwards and the lower protrusion 27 clears the lower valve part. If the rotary knob 26 is rotated counterclockwise the lower protrusion 28 pulls the lower valve part upwards and the upper protrusion 27 clears the upper valve part.

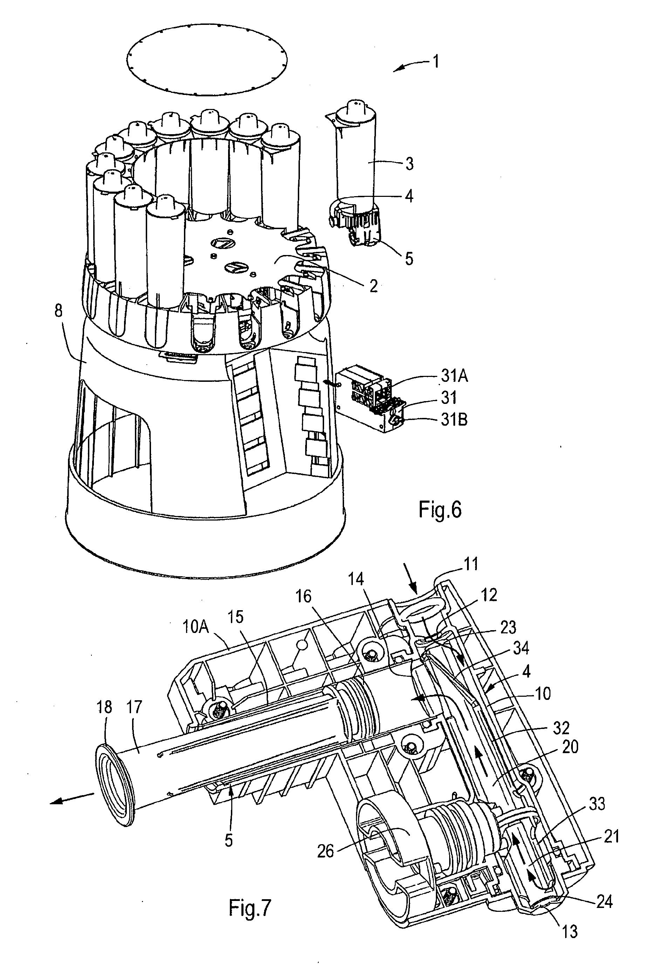

Figure 6 shows a second example of an apparatus 1 for dispensing a plurality of fluids. Similar to the apparatus shown in Figures 1 to 5B, this dispensing apparatus 1 is an automated version including a horizontal turntable 2, with a plurality of containers 3 mounted along its circumference. Each container 3 is provided with a pump 4 and a dispense valve 5.

A swappable module 31 is located beneath the turntable and within the ring of containers and pumps. The module comprises a housing accommodating actuators 31A, 31B for operating respectively the pump 4 and the valve 5 of the container 3 at the dispensing position. The motors and gears for driving the turntable and the stirring elements within the containers are located in the turntable, outside the module and in a manner known in itself, e.g. from EP 800 858.

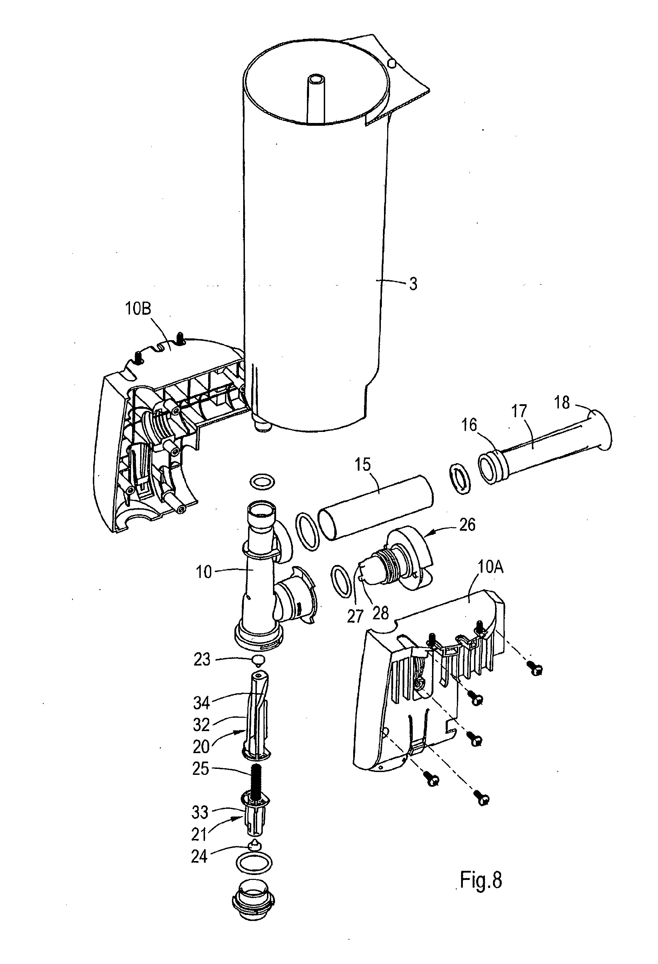

As shown in Figures 7 and 8, each valve assembly 4 comprises a housing 10 accommodated in shells 10A, 10B and having an inlet opening 12 in or near its top section 11, an outlet opening 13 in or near its bottom, and a further opening 14 in its side wall, which opening 14 communicates with a pump 5. In this example, the pump 5 comprises a cylinder 15, e.g. made of metal, fitted to the housing 10 and in the shells 10A, 10B and a piston 16 and piston rod 17 mounted inside the cylinder 15. The piston rod 17 is provided, on its end remote from the piston 16, with a washer or flange 18.

A valve member is translatably disposed within the housing 10. The valve member comprises two parts, a first part 20 for closing and opening the inlet 12 and a second part 21 for opening and closing the outlet 13. The housing 10 is substantially cylindrical and the valve parts 12, 13 comprise laterally protruding walls 32, 33 running the length of respective parts 20, 21. These walls, on the one hand, serve as guides that support translating motion of the valve parts 20, 21 within the housing 10 and, on the other hand, define channels to allow the fluid to flow from the inlet 12 to the pump 5 and from the pump 5 to the outlet 13.

The valve parts 20, 21 are resiliently biased apart and into closing abutment with the inlet and outlet openings 12, 13 by means of a helical spring 25 positioned between the first and second parts 20, 21 of the valve member.

Finally, the valve assembly shown in Figures 6 to 8 comprises an operating element, e.g. a handle, lever, or, in this example, a rotary knob 26, similar in function to the one described above.

In the intake position of the knob and the valve parts, the pump communicates with a container and is filled with a desired amount of the fluid from the container by pulling the flange 18 and thus the piston 16 away from the valve over a desired or predetermined length by means of a central actuator.

As soon as a selected amount of fluid has been taken in, the knob is rotated, via the closed position, to the dispense position. In this position, the pump communicates with the dispense outlet in the bottom surface of the pump housing and the fluid is dispensed by pushing the flange and thus the piston towards the valve.

In the embodiment shown in Figures 6 to 8, the laterally protruding walls 32 on the valve part 20 comprise inclined portions 34 located at or overlapping the same axial position as the pump 5. The inclined portions 34 substantially close off or at least obstruct fluid flow directly from the inlet 12 to the pump 5 and guide fluid flow towards and preferably beyond the end of the valve party 20 remote from the inlet opening 12. Further, in this example, the laterally protruding walls 33 on the part 21 closing the outlet opening 13 facilitate fluid flow towards the (closed) outlet 13 and turning the fluid flow towards the pump 5. Thus, with each intake stroke of the pump, the entire or most of the volume of the valve is flushed, which process is indicated by arrows in Figure 7, and segregation of the components in the fluid is avoided or at least reduced.

In the configurations described above, the direction of translation of the first and second valve parts and the direction of the resilient bias are aligned and are normal (i.e. perpendicular) to the area defined by the inlet and outlet openings. The spring and the resilient seats compensate variations in the dimension of the housing and the valve parts and thus inherently allow relatively wide tolerances, i.e. no high precision parts are required, and provide improved reliability.

As a matter of course, this disclosure is not restricted to the above-disclosed embodiments, which may be varied in different manners within the spirit and scope of the invention. For example, although it is preferred that the first and second valve parts are separate (detached) parts, the parts could instead be telescopically coupled or indeed resiliently attached.

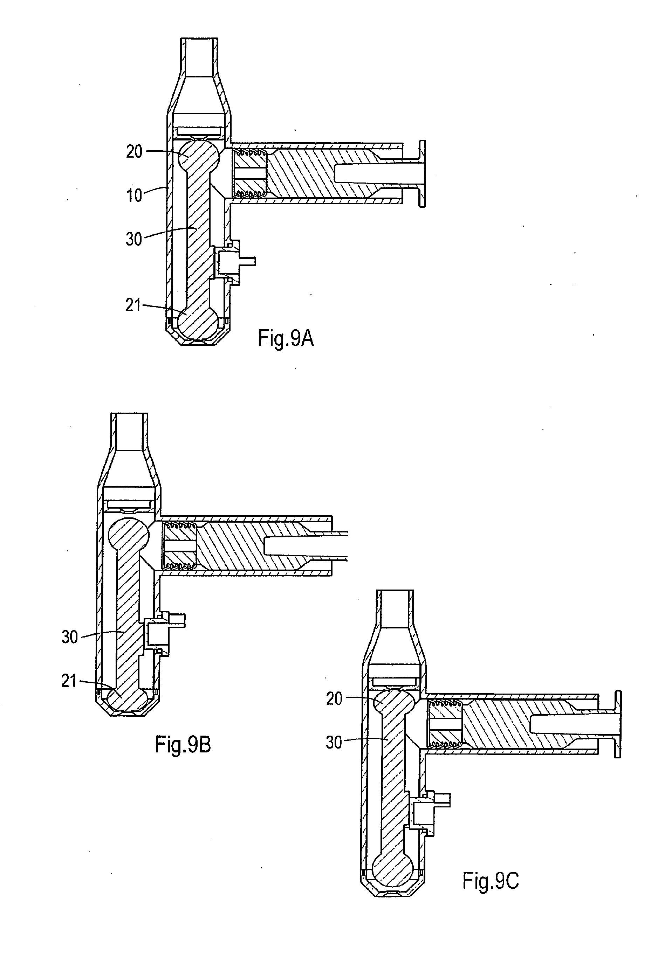

In the embodiment shown in Figures 9A to 9C, the first and second valve parts 20, 21 are made of a resilient material, e.g. an elastomer, such as Viton™. A rigid element, e.g. a rod 30 made of a non-elastomeric polymer, such as PET or PEEK, or of a metal, such as aluminum, is positioned between the parts 20, 21. In this example, the valve parts are attached to the rod yielding an overall length that exceeds the length of the cavity defined by the housing. Thus, in the closed position, both the inlet and the outlet openings are closed and the valve parts are resiliently compressed (deformed; Figure 9A). In the intake position, the valve member is forced in the direction of the outlet opening, clearing the inlet opening and further compressing the lower valve part (Figure 9B). In the dispense position, the valve member is forced in the direction of the inlet opening, clearing the outlet opening and further compressing the upper valve part (Figure 9C).

In a further variation, instead of operating both valve parts with a single operating element, each part could instead be individually provided with an operating element.

## Claims

1. A valve assembly (4) for a dispenser for fluids comprising:
a housing (10) having at least an inlet opening (12) and an outlet opening (13) and a further opening (14) connected or connectable to a fluid displacement mechanism (5), and
a valve member comprising two parts (20, 21) translatably disposed within the housing, a first part (20) for closing and opening the inlet (12) and a second part (21) for opening and closing the outlet (13),
wherein, in at least one position of the valve, both parts (20, 21) are resiliently biased or urged into closing abutment with the inlet and outlet openings (12, 13).

2. The valve assembly (4) according to claim 1, comprising an elastic element (25) positioned between the first and second parts (20, 21) cf the valve member and the parts are biased apart by the elastic element.

3. The valve assembly (4) according to claim 2, wherein the elastic element is a helical spring (25).

4. The valve assembly (4) according to any one of the preceding claims, wherein a resilient seat (23, 24) is provided at the interface between at least one of the parts (20, 21) and the opening (12, 13) it closes.

5. The valve assembly (4) according to any one of the preceding claims, wherein the first and second parts (20, 21) are resilient and a rigid element (30) is positioned between the parts (20, 21).

6. The valve assembly (4) according claim 5, wherein the overall length of the valve parts (20, 21) and the rigid element (30) exceeds the length of the cavity defined by the housing (10).

7. The valve assembly (4) according to any one of the preceding claims, comprising an operating element (26) extending through the wall of the housing (10) and coupled to the valve member.

8. The valve assembly (4) according to claim 7, wherein the operating element (26) provides at least three positions, a first position wherein both parts (20, 21) are in closing abutment with respective openings (12, 13), a second position wherein the first part (20) of the valve member is withdrawn from the inlet (12) and the second part (21) closes the outlet (13), and a third position wherein the second part (21) of the valve member is withdrawn from the outlet and the first part (20) closes the inlet (12).

9. The valve assembly (4) according to any one of the preceding claims, wherein at least one of the parts (20, 21) and/or the inner wall of the housing (10) is provided with guides (22) supporting translating motion of the parts (20, 21) and defining openings or channels that allow the fluid to flow from the inlet (12) to the displacement mechanism (5) and from the displacement mechanism to the outlet (13).

10. The valve assembly (4) according to any one of the preceding claims, wherein at least one of the parts (20, 21) comprises a portion (34) that, during intake of fluid, substantially closes off or at least obstructs fluid flow directly from the inlet opening (12) to the fluid displacement mechanism (5) and guides fluid flow towards and preferably beyond its end remote from the inlet opening.

11. The valve assembly (4) according to any one of the preceding claims, wherein the direction of translation of the first and second parts (20, 21) and ot the resilient bias are parallel or aligned and at least substantially normal to the area defined by the inlet and outlet openings (12, 13).

12. The valve assembly (4) according to any one of the preceding claims, wherein the housing (10) is connected to a piston pump (5).

13. An apparatus (1) for dispensing a plurality of fluids, comprising a support, such as a turntable (2) or a linear table, a plurality of containers (3) for holding a fluid and mounted on the support, pumps (5) and valve assemblies (4) according to any one of the preceding claims connected to respective containers (3).

14. The apparatus (1) according to claim 13, wherein the pumps (5) form an integral part of the valve assemblies (4) and/or wherein at least some of the pumps (5) are located below the container (3) and/or extend at least substantially horizontally.

## Patentansprüche

1. Ventileinrichtung (4) für einen Ausgeber für Fluide, aufweisend:
ein Gehäuse (10) mit wenigstens einer Einlassöffnung (12) und einer Auslassöffnung (13) und einer zusätzlichen Öffnung (14), die mit einem Fluidverlagerungsmechanismus (5) verbunden oder verbindbar ist, und
ein Ventilelement mit zwei Teilen (20, 21), die in dem Gehäuse verschiebbar angeordnet sind, wobei ein erstes Teil (20) zum Schließen und Öffnen des Einlasses (12) und ein zweites Teil (21) zum Öffnen und Schließen des Auslasses (13) sind,
wobei, in wenigstens einer Position des Ventils, beide Teile (20, 21) in schließende Anlage mit der Einlass- und der Auslassöffnung (12, 13) elastisch vorgespannt oder gezwungen sind.

2. Ventileinrichtung (4) gemäß Anspruch 1, mit einem elastischen Element (25), das zwischen dem ersten und dem zweiten Teil (20, 21) des Ventilelements positioniert ist, wobei die Teile von dem elastischen Element voneinander weg vorgespannt sind.

3. Ventileinrichtung (4) gemäß Anspruch 2, wobei das elastische Element eine Schraubenfeder (25) ist.

4. Ventileinrichtung (4) gemäß irgendeinem der vorhergehenden Ansprüche, wobei ein elastischer Sitz (23, 24) als die Schnittstelle zwischen wenigstens einem der Teile (20, 21) und der Öffnung (12, 13), die es schließt, bereitgestellt ist.

5. Ventileinrichtung (4) gemäß irgendeinem der vorhergehenden Ansprüche, wobei der erste und der zweite Sitz (20, 21) elastisch sind und ein starres Element (30) zwischen den Teilen (20, 21) positioniert ist.

6. Ventileinrichtung (4) gemäß Anspruch 5, wobei die Gesamtlänge der Ventilteile (20, 21) und des starren Elements (30) die Länge der von dem Gehäuse (10) definierten Kavität überschreitet.

7. Ventileinrichtung (4) gemäß irgendeinem der vorhergehenden Ansprüche, aufweisend eine Betätigungselement (26), das sich durch die Wand des Gehäuses (10) erstreckt und mit dem Ventilelement gekuppelt ist.

8. Ventileinrichtung (4) gemäß Anspruch 7, wobei das Betätigungselement (26) wenigstens drei Positionen bereitstellt, eine erste Position, wobei beide Teile (20, 21) in schließender Anlage mit den jeweiligen Öffnungen (12, 13) sind, eine zweite Position, wobei das erste Teil (20) des Ventilelements von dem Einlass (12) weggenommen ist und das zweite Teil (21) den Auslass (13) schließt, und eine dritte Position, wobei das zweite Teil (21) des Ventilelements von dem Auslass weggenommen ist und das erste Teil (20) den Einlass (12) schließt.

9. Ventileinrichtung (4) gemäß irgendeinem der vorhergehenden Ansprüche, wobei wenigstens eines der Teile (20, 21) und/oder die Innenwand des Gehäuses (10) mit Führungen (22) versehen ist, die die Verschiebebewegung der Teile (20, 21) stützen und Öffnungen oder Kanäle definieren, die es dem Fluid erlauben, von dem Einlass (12) zu dem Verlagerungsmechanismus (5) und von dem Verlagerungsmechanismus zu dem Auslass (13) zu strömen.

10. Ventileinrichtung (4) gemäß irgendeinem der vorhergehenden Ansprüche, wobei wenigstens eines der Teile (20, 21) einen Abschnitt (34) hat, der, während des Einlasses von Fluid, den Fluidfluss direkt von der Einlassöffnung (12) zu dem Fluidverlagerungsmechanismus (5) im Wesentlichen unterbindet oder wenigstens hemmt und den Fluidfluss zu seinem Ende entfernt von der Einlassöffnung hin und bevorzugt darüber hinausgehend führt.

11. Ventileinrichtung (4) gemäß irgendeinem der vorhergehenden Ansprüche, wobei die Richtung der Verschiebung des ersten und des zweiten Teils (20, 21) und der elastischen Vorspannung parallel oder fluchtend und wenigstens im Wesentlichen senkrecht zu der von der Einlass- und der Auslassöffnung (12, 13) definierten Fläche sind.

12. Ventileinrichtung (4) gemäß irgendeinem der vorhergehenden Ansprüche, wobei das Gehäuse (10) mit einer Kolbenpumpe (5) verbunden ist.

13. Vorrichtung (1) zum Ausgeben einer Mehrzahl von Fluiden, mit einem Halter, wie z.B. einem Drehtisch (2) oder einem Lineartisch, einer Mehrzahl von Behältern (3) zum Halten eines Fluid, die an dem Halter angebracht sind, Pumpen (5) und Ventileinrichtungen (4) gemäß irgendeinem der vorhergehenden Ansprüche, die mit den jeweiligen Behältern (3) verbunden sind.

14. Vorrichtung (1) gemäß Anspruch 13, wobei die Pumpen (5) ein integrales Teil der Ventileinrichtungen (4) bilden und/oder wobei wenigstens einige der Pumpen (5) unter dem Behälter (3) angeordnet sind und/oder sich wenigstens im Wesentlichen horizontal erstrecken.

## Revendications

1. Ensemble formant valve (4) pour un distributeur de fluides comprenant :
un logement (10) ayant au moins une ouverture d'admission (12) et une ouverture d'évacuation (13) et une ouverture supplémentaire (14) reliée ou pouvant être reliée à un mécanisme de déplacement de fluide (5), et
un membre de valve comprenant deux parties (20, 21) disposées de façon à pouvoir être déplacées par translation à l'intérieur du logement, une première partie (20) permettant de fermer et d'ouvrir l'admission (12) et une deuxième partie permettant d'ouvrir et de fermer l'évacuation (13),
dans lequel, dans au moins une position de la valve, les deux parties (20, 21) sont sollicitées ou pressées de manière résiliente en une fermeture en butée avec les ouvertures d'admission et d'évacuation (12,13).

2. Ensemble formant valve (4) selon la revendication 1, comprenant un élément élastique (25) positionné entre les première et deuxième parties (20, 21) du membre de valve et les parties sont sollicitées vers une configuration écartée par l'élément élastique.

3. Ensemble formant valve (4) selon la revendication 2, dans lequel l'élément élastique est un ressort hélicoïdal (25).

4. Ensemble formant valve (4) selon l'une quelconque des revendications précédentes, dans lequel un siège résilient (23, 24) est prévu à l'interface entre au moins une des parties (20, 21) et l'ouverture (12, 13) qu'elle ferme.

5. Ensemble formant valve (4) selon l'une quelconque des revendications précédentes, dans lequel les première et deuxième parties (20, 21) sont résilientes et un élément rigide (30) est positionné entre les parties (20, 21).

6. Ensemble formant valve (4) selon la revendication 5, dans lequel la longueur totale des parties de valve (20, 21) et de l'élément rigide (30) dépasse la longueur de la cavité définie par le logement (10).

7. Ensemble formant valve (4) selon l'une quelconque des revendications précédentes, comprenant un élément de commande (26) s'étendant à travers la paroi du logement (10) et raccordé au membre de valve.

8. Ensemble formant valve (4) selon la revendication 7, dans lequel l'élément de commande (26) propose au moins trois positions, une première position dans laquelle les deux parties (20, 21) sont en fermeture en butée avec leurs ouvertures respectives (12, 13), une deuxième position dans laquelle la première partie (20) du membre de valve est retirée de l'admission (12) et la deuxième partie (21) ferme l'évacuation (13), et une troisième position dans laquelle la deuxième partie (21) du membre de valve est retirée de l'évacuation et la première partie (20) ferme l'admission (12).

9. Ensemble formant valve (4) selon l'une quelconque des revendications précédentes, dans lequel au moins une des parties (20, 21) et/ou la paroi intérieure du logement (10) sont équipées de guides (22) supportant le mouvement de translation des parties (20, 21) et définissant des ouvertures ou des canaux qui permettent au fluide de circuler de l'admission (12) au mécanisme de déplacement (5) et du mécanisme de déplacement (5) à l'évacuation (13).

10. Ensemble formant valve (4) selon l'une quelconque des revendications précédentes, dans lequel au moins une des parties (20, 21) comprend une portion (34) qui, pendant l'admission de fluide, se ferme sensiblement ou au moins obstrue la circulation du fluide directement à partir de l'ouverture d'admission (12) jusqu'au mécanisme de déplacement de fluide (5) et guide la circulation du fluide vers et de préférence au-delà de l'extrémité éloignée de l'ouverture d'admission.

11. Ensemble formant valve (4) selon l'une quelconque des revendications précédentes, dans lequel la direction de translation des première et deuxième parties (20, 21) et des sollicitations résilientes sont parallèles ou alignées et au moins sensiblement normales à la zone définie par les ouvertures d'admission et d'évacuation (12, 13).

12. Ensemble formant valve (4) selon l'une quelconque des revendications précédentes, dans lequel le logement (10) est relié à une pompe à piston (5).

13. Appareil (1) destiné à distribuer une pluralité de fluides, comprenant un support, telle qu'une platine(2) ou une table linéaire, une pluralité de conteneurs (3) destinés à contenir un fluide et montés sur le support, des pompes (5) et des ensembles formant valves (4) selon l'une quelconque des revendications précédentes reliés aux conteneurs respectifs (3).

14. Appareil (1) selon la revendication 13, dans lequel les pompes (5) forment une partie intégrale des ensembles formant valves (4) et/ou dans lequel au moins certaines des pompes (5) sont localisées sous les conteneurs (3) et/ou s'étendent au moins sensiblement horizontalement.
